# FASCICULE DE BREVET EUROPEEN

(11) **EP 0 544 591 B1**
(45) Date de publication et mention de la délivrance du brevet: **03.07.1996**
(21) Numéro de dépôt: 92403177.6
(22) Date de dépôt: 25.11.1992
(51) Int. Cl.: B60N 3/14, F23Q 7/00, H01R 15/10

(54) **Prise de courant, notamment pour véhicule automobile**
Steckdose, insbesondere für ein Kraftfahrzeug
Electrical socket, especially for a motor vehicle

(30) Priorité: 27.11.1991 FR 9114671
(43) Date de publication de la demande: 02.06.1993
(73) Titulaire: VALEO VISION, 93012 Bobigny Cédex (FR)
(72) Inventeur: Neyret, Bertrand, F-81100 Castres (FR); Thivet, Gilles, F-81290 Labruguière (FR)
(74) Mandataire: Gamonal, Didier

(56) Documents cités:
- DE-A- 3 240 716
- DE-C- 3 932 602
- FR-A- 2 446 741
- US-A- 4 058 701
- US-A- 4 204 109
- US-A- 4 230 931
- US-A- 4 544 226

## Description

La présente invention concerne une prise de courant, notamment pour véhicule automobile, selon le préambule de la revendication 1 et tel que décrit dans la demande EP-A-0 495 719.

Dans ce document, le disjoncteur est à coefficient de température positif et en cas de surchauffe, passe très rapidement d'une très basse résistance à une résistance élevée lorsque suite à une surintensité, due par exemple à un court-circuit ou à une surchauffe, sa température dépasse un certain seuil.

Cette disposition donne satisfaction, néanmoins dans certains cas, ce disjoncteur peut être serré avec un effort trop important.

Cet effort de serrage mal maîtrisé provient du fait que la première et la seconde pièce isolante sont reliées ensemble par au moins un organe d'assemblage.

La présente invention a pour objet de résoudre ce problème de manière simple et économique, en tirant parti des pièces isolantes.

Ce problème est résolu, conformément à l'invention, par la partie caractérisante de la revendication 1.

Grâce à l'invention, le serrage du disjoncteur thermique réarmable est contrôlé de manière précise et est indépendant de l'effort de serrage engendré par l'organe d'assemblage. En outre, les moyens élastiques spécifiques permettent d'assurer un contact permanent entre le disjoncteur et le fond du corps de la prise.

Il en résulte que ledit disjoncteur thermique réarmable travaille dans de bonnes conditions et ne risque pas d'être endommagé par une pression trop importante. Le nombre de pièces mises au rebus après contrôle de la fabrication est ainsi diminué et la durée de vie de la prise de courant est augmentée de manière simple et économique.

En outre l'implantation de l'élément de contact est inchangée ainsi que la partie de réception de la prise, en sorte que l'on peut utiliser toujours les mêmes fiches de courant, et que la structure globale de la prise est conservée. De plus il devient possible, grâce au serrage contrôlé et aux moyens d'espacement, d'utiliser un disjoncteur thermique réarmable sous forme d'une cloqueuse, par exemple un disque bilame comme décrit dans le document FR-A-2 377 579.

Avantageusement les moyens d'espacement sont solidaires de l'une des pièces isolantes pour réduction du nombre de pièces et utilisation d'un corps standard.

Dans tous les cas, le limiteur de pression évite que le disjoncteur flue et/ou soit l'objet d'amorce de ruptures. Lorsque le disjoncteur est à base de polymère semi-conducteur, on évite toute jonction entre les électrodes.

Lorsque le disjoncteur est un disque bilame on rend aisé son retournement sans risques de rupture de celui-ci.

La description qui va suivre illustre l'invention en regard des dessins annexés dans lesquels :
- la figure 1 est une vue éclatée en coupe axiale d'un allume-cigares selon l'art antérieur,
- la figure 2 est une vue en coupe du disjoncteur thermique réarmable à coefficient de température positif,
- la figure 3 est une courbe caractéristique de la résistance en fonction de la température dudit disjoncteur thermique réarmable,
- la figure 4 est une vue en coupe du corps d'allumage pour un premier exemple de réalisation selon l'invention,
- la figure 5 est une vue partielle selon la flèche 5 de la figure 4 montrant les moyens élastiques selon l'invention,
- la figure 6 est une vue en coupe du corps d'allumage pour un second exemple de réalisation selon l'invention,
- la figure 7 est une vue partielle montrant l'échancrure pratiquée dans la première partie d'alimentation électrique selon l'exemple de réalisation de la figure 6,
- les figures 8,9,11 sont des vues partielles analogues à la figure 4 pour respectivement un troisième, un quatrième et un cinquième exemple de réalisation selon l'invention,
- la figure 10 est une vue partielle en coupe axiale pour un sixième exemple de réalisation selon l'invention,
- les figures 12 et 13 sont des vues analogues à la figure 4 pour encore d'autres variantes de réalisation.

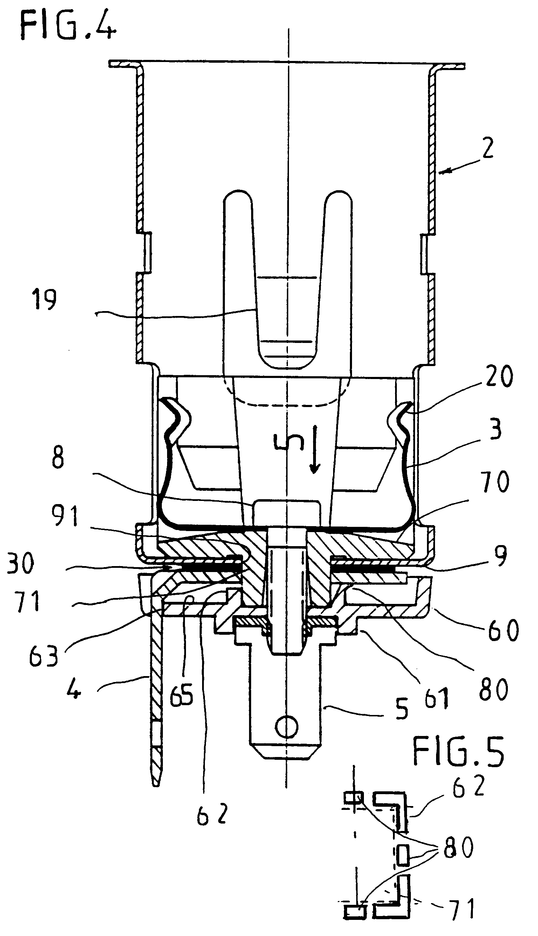

Dans les figures 4 à 13, selon l'invention, la prise de courant appartient à un allume-cigares pour véhicule automobile et par convention on entend par pièce isolante une pièce électriquement isolante, telle que de la matière plastique, et par pièce conductrice une pièce en matériau électriquement conducteur, par exemple une pièce métallique.

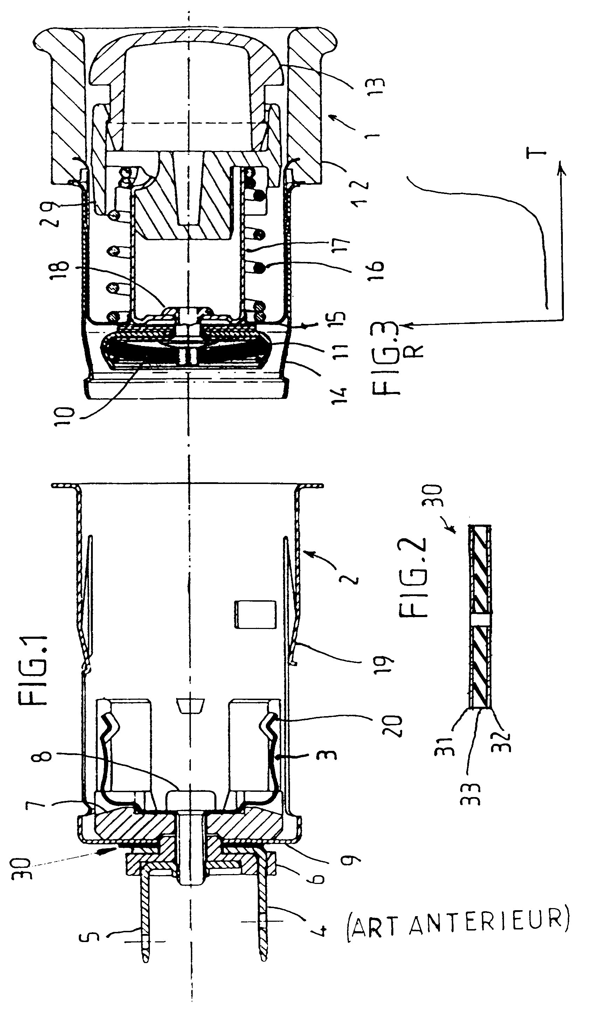

Pour mémoire (figures 1 à 3) on rappellera qu'un allume-cigares comporte, d'une part, un bouchon amovible 1, formant une fiche de courant, pourvu d'une coupelle d'extrémité 11 recevant un corps électrique de chauffage 10 destiné à allumer une cigarette ou un cigare, et, d'autre part, un corps d'allumage creux 2, formant prise de courant, pourvu d'un élément de contact électrique 3, généralement un bilame d'accrochage 3, et de parties d'alimentation électriques, généralement des languettes 4,5, avec intervention de rondelles d'isolation électriques 6,7, assemblées entre elles par une vis 8.

Le bouchon 1 se loge à coulissement à l'intérieur du corps 2 pour occuper soit une position de chauffage, soit une position de repos, ou être extrait.

Pour ce faire le bouchon chauffant 1 présente un bouton 13 mobile et un pare-cendres 14 cranté, et le corps 2 des languettes de retenue 19.

Ce bouchon 1 est normalement enfoncé dans le corps 2 et les languettes 19 retiennent le pare-cendres 14.

En position de repos la coupelle 11 est au-dessus du bilame 3, tandis qu'en position de chauffage (bouton 13 enfoncé) la coupelle 11 coopère à accrochage avec le bilame 3.

Un circuit électrique est alors établi à travers le bilame 3 et le corps de chauffage 10 ; les lames du bilame 3 s'incurvant vers l'extérieur au fur et à mesure de l'échauffement jusqu'à désenclenchement de la coupelle 11 sous l'action d'un ressort de rappel 16 porté par le bouchon. Il ne reste plus qu'à l'usager à extraire le bouchon pour allumer sa cigarette.

Ainsi lorsque le bouton 13 est enfoncé un circuit électrique s'établit de la languette 5, reliée à la borne positive de la batterie du véhicule, à la languette 4 reliée à la borne négative de la batterie, à travers la vis 8, la coupelle 11, le corps de chauffage 10, l'organe 18, le bilame 3, la douille 17, le guide 15, le pare-cendres 14 et le corps 2, lesdites pièces étant en matériau conducteur.

Dans certains cas, la coupelle 11, par exemple lorsqu'elle est mal positionnée, n'arrive pas à se désenclencher du bilame 3, et pour éviter une surchauffe de l'allume-cigares il est prévu un dispositif de protection contre les surchauffes inséré dans le circuit électrique de l'allume-cigares.

Dans le document EP-A-0 495 719, il s'agit d'un disjoncteur thermique réarmable 30 à coefficient de température positif permanent avec une résistance augmentant brusquement avec la température (figure 3).

Ce disjoncteur 30, en forme de plaque, est par exemple un composant vendu sous la marque "PolySwich" par la Société "RAYCHEM" et comporte deux électrodes métalliques 31,32 disposées de part et d'autre d'une matrice 33 en polymère semi-conducteur (figure 2). Cette matrice contient des particules conductrices par exemple à base de carbone tel que du graphite.

En cas de surchauffe, il se produit en quelque sorte un gonflement de la matrice avec séparation des particules conductrices, en sorte que ce disjoncteur passe très rapidement d'une très basse résistance à une résistance élevée consécutivement à une surintensité ou à une surchauffe provoquée par le corps de chauffage 10.

Pour réarmer le disjoncteur, il suffit d'ôter le bouchon 11. Le disjoncteur en refroidissant retrouve alors sa faible résistance, l'allume-cigares devenant à nouveau opérationnel sans qu'il soit nécessaire de remplacer un quelconque fusible.

En variante, le disjoncteur thermique réarmable à coefficient de température positif permanent peut être un composant en céramique à base de titanate de baryum. Dans tous les cas, il est nécessaire de prendre des précautions pour que la vis 8 ne provoque pas une pression trop importante sur le disjoncteur.

Ainsi suivant l'invention, une prise de courant, notamment pour véhicule automobile, du genre comportant un corps creux 2 conducteur avec un fond 9 pour réception d'une fiche de courant 1 et établissement d'un circuit électrique par l'intermédiaire de pièces portées par ledit corps, à savoir, d'un disjoncteur thermique réarmable 30 en contact avec le fond 9 du corps 2, d'une première partie d'alimentation électrique 4 au contact direct ou indirect dudit disjoncteur 30 en étant portée par une première pièce isolante électriquement 60, d'une seconde partie d'alimentation électrique 5 isolée de la première partie d'alimentation électrique 4 par ladite première pièce isolante 60 et reliée électriquement à un élément de contact électrique 3, propre à coopérer avec ladite fiche de courant 1 en étant portée par une seconde pièce isolante électriquement 70, pour isolation dudit élément de contact 3 par rapport au fond 9 du corps 2, dans lequel ladite seconde pièce isolante 70 et ledit élément de contact 3 sont montés à l'intérieur du corps 2, tandis que ledit disjoncteur 30, les première 4 et seconde 5 parties d'alimentation électriques ainsi que ladite première pièce isolante 60 sont montés à l'extérieur du corps 2, avec intervention de moyens d'assemblage 8,81 entre les pièces isolantes 60,70, est caractérisée en ce que ledit disjoncteur thermique réarmable 30 est soumis à l'action de moyens élastiques spécifiques à action axiale 80,180,280 prenant appui sur la première pièce isolante 60 pour action sur la première partie d'alimentation électrique 4 et serrage contrôlé dudit disjoncteur thermique entre le fond 9 du corps 2 et une partie de pression conductrice portée par ladite première partie d'alimentation électrique 4, et en ce que des moyens d'espacement 71,171,271 sont prévus pour maintenir la première pièce isolante 60 à distance du fond 9 du corps 2, en sorte de créer un limiteur de pression.

Dans les figures 4 à 13, la première 60,600 et la seconde 70 pièce isolante sont avantageusement en matière plastique en étant de forme annulaire. En variante elles peuvent être en un autre matériau isolant.

La première pièce isolante 60,600 est avantageusement creuse pour protection desdits moyens élastiques selon l'invention, en étant plus haute que ceux-ci. Il est formé ainsi une cavité de protection et de logement pour les moyens élastiques et également le disjoncteur. Cette pièce 60,600 protège le disjoncteur 30 par masquage et sert également à immobiliser en rotation les première et seconde parties d'alimentation électriques, ici sous forme de languettes 4 et 5, avec des parties axiales s'étendant à l'extérieur du corps 2 de forme cylindrique et métallique.

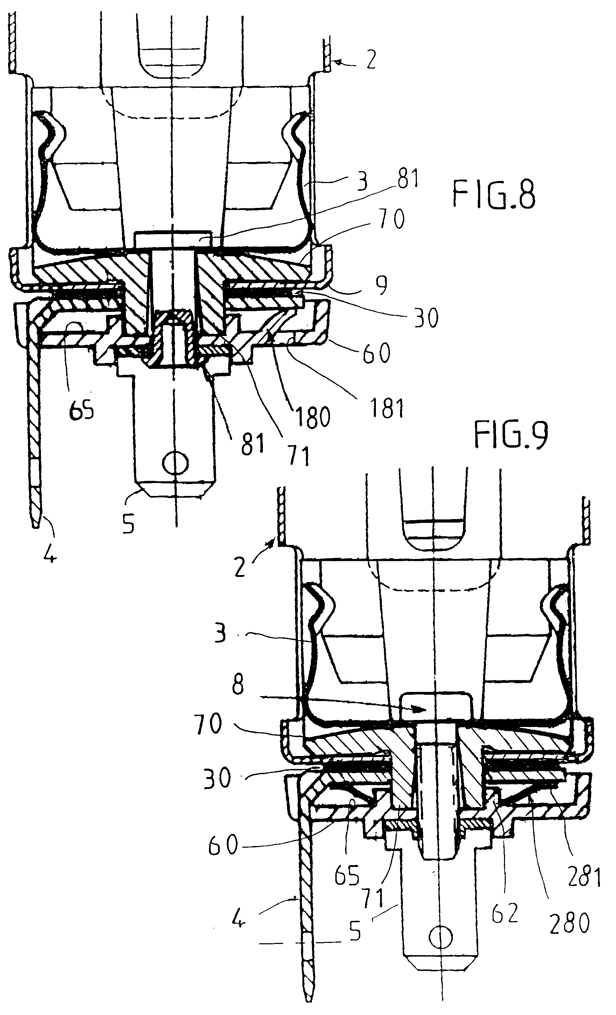

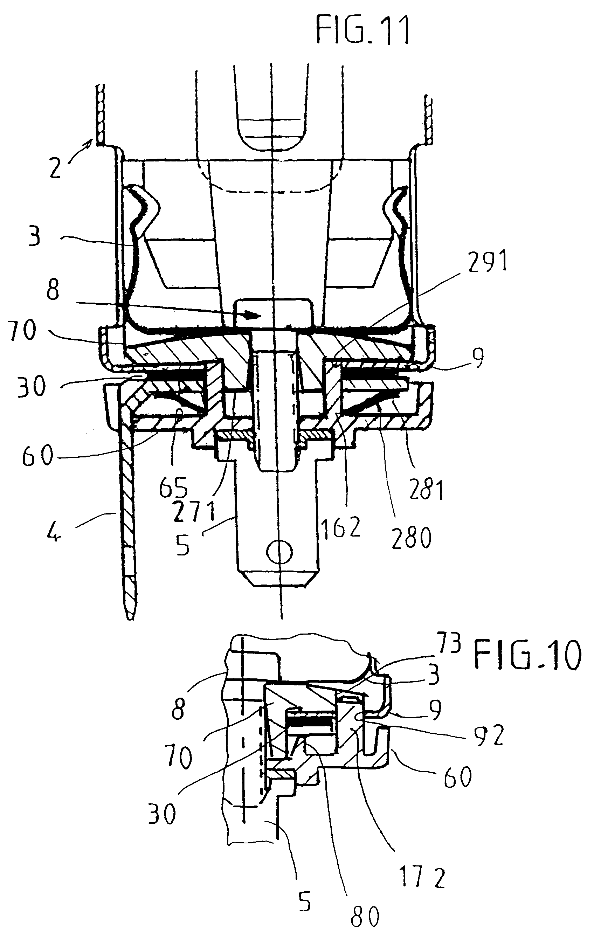

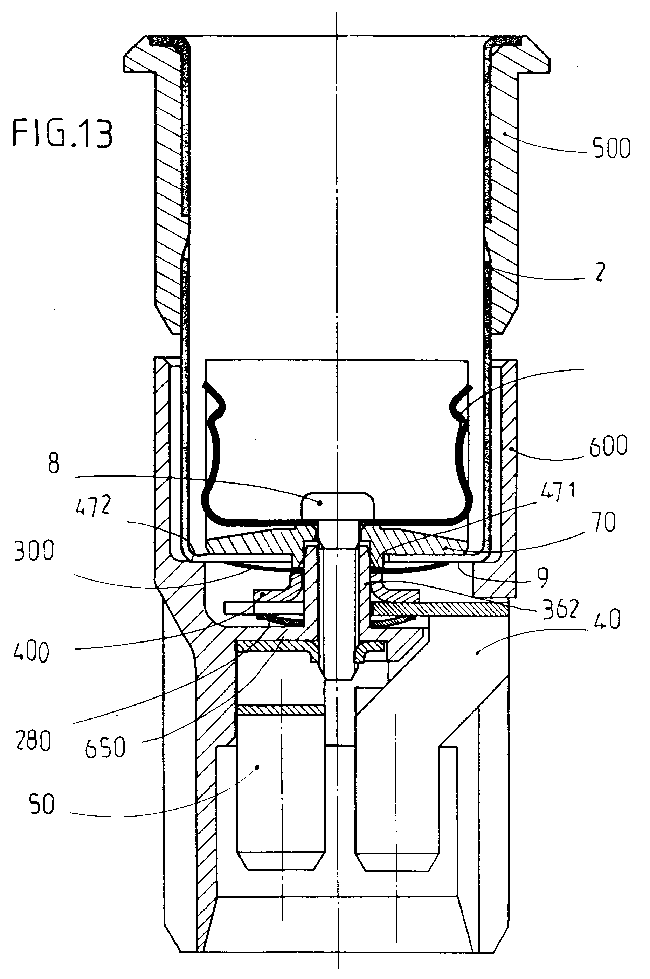

Dans les formes de réalisation des figures 9,11,13 les moyens élastiques spécifiques à action axiale consistent en une rondelle Belleville 280 centrée intérieurement par la première pièce isolante 60,600 à la faveur d'une saillie isolante 62 (figure 9), 162 (figure 11), 362 (figure 13), issue du fond 65 (figure 9 et 11), 365 (figure 13) de ladite pièce isolante 60,600.

En variante on peut utiliser un ressort à boudin ou une rondelle élastique ondulée.

Dans tout les cas on maîtrise bien le serrage du disjoncteur.

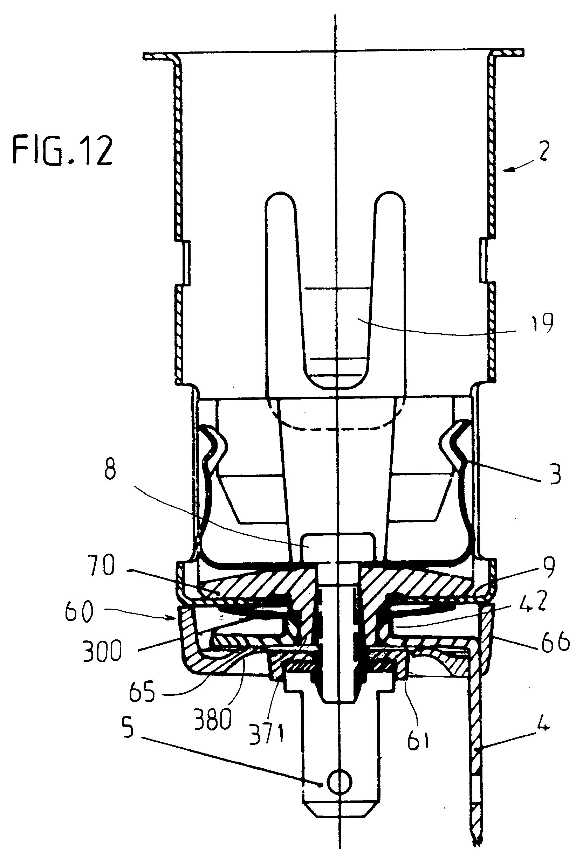

Dans les formes de réalisation des figures 4,6,8,10,12 les moyens élastiques spécifiques à action axiale consistent en des pattes élastiquement déformables 80 (figures 4,6,10), 180 (figure 8), 380 (figure 12) issues directement de la première pièce isolante 60,600, en sorte que le nombre de pièces de la prise demeure inchangé.

Avantageusement ces pattes 80,180,380, saillantes axialement ver le fond 9 par rapport au fond 65,650 de la pièce 60,600, ont une forme éffilée pour augmenter leur souplesse et contact ponctuel par leur extrémité libre avec la base, décrite ci-après, de la languette 4.

Dans la figure 13 la partie de pression conductrice est constituée par une pièce distincte électriquement conductrice 400 portée par la base de la languette 4.

Dans les autres figures cette partie de pression, en contact dans tout les cas avec le disjoncteur 30,300, appartient directement à la languette 4, qui dans tous les cas, sous l'action des moyens élastiques 80,180,280,380 agissant sur elle, forme un organe presseur pour serrage du disjoncteur 30,300 entre la partie de pression et le fond 9 du corps 20.

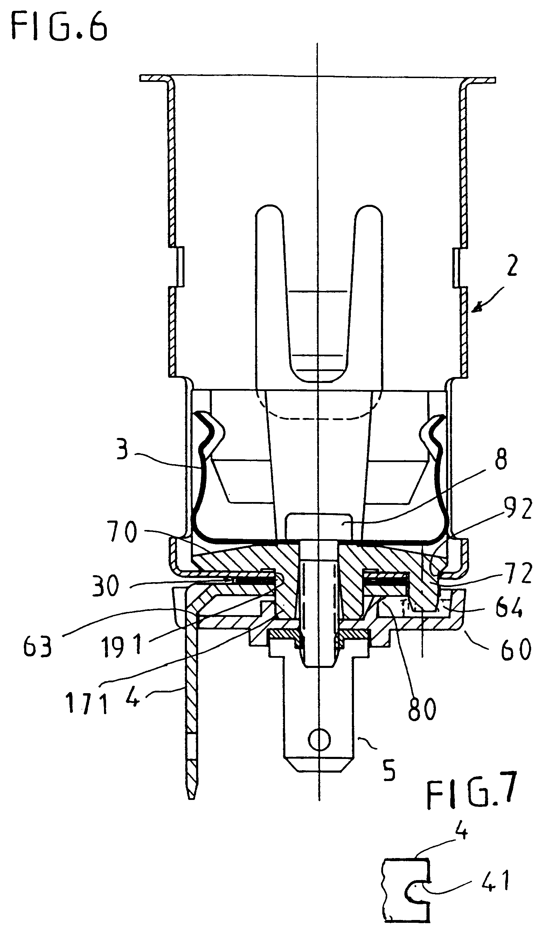

Plus précisément la première languette 4 a globalement la forme d'une équerre avec une base horizontale au contact (figures 4 à 11) dudit disjoncteur 30 à coefficient de température positif permanent. Cette base constitue une plaque de pression et est soumise dans les figures 4 et 5 à l'action des pattes inclinées d'orientation axiale 80 issues de la première pièce isolante 60.

Ces pattes 80 élastiques font saillie axialement par rapport au fond 65 de la pièce 60 et ont une extrémité effilée. Ces pattes sollicitent la languette 4 vers le fond 9 pour serrage élastique contrôlé du disjoncteur 30 entre le fond 9 et la base de la languette 4.

La languette 4 est montée mobile axialement, sous l'action des pattes 80, par rapport à la pièce 60 en étant liée en rotation à la pièce 60 par coopération de formes, la partie axiale de la languette 4 traversant pour ce faire une ouverture complémentaire 63 pratiquée dans le fond 65.

Les pattes 80 interrompent localement le contour de la saillie creuse 62 de forme rectangulaire en étant plus haute que la saillie 62 pour contact avec la languette 4. Cette saillie 62, fractionnée par les pattes 80, est issue centralement du fond 65 en s'étendant axialement en direction du fond 9. La saillie 62 est propre à coopérer avec un nez saillant 71 isolant issu centralement de la seconde pièce 70. Ce nez traverse centralement une ouverture 91 du fond 9 ainsi que le disjoncteur 30 et la base de la languette 4 percés centralement à cet effet. Ce nez 71 a un contour de forme rectangulaire, tout comme les perçages des pièces 9,30,4, qu'il traverse de manière complémentaire et est propre à coopérer de manière complémentaire avec la saillie 62 en étant entouré par celle-ci. Ce nez 71 est percé centralement et est traversé par l'organe d'assemblage 8, ici une vis métallique, dont la tête prend appui sur la base du bilame 3. Cette vis traverse également la pièce 60 et est assemblée par vissage à la seconde languette 5 également en forme d'équerre. Cette languette 5 a une base munie d'un trou taraudé pour vissage de la vis 8 et est immobilisée en rotation par coopération de formes avec des saillies 61 issues de la pièce 60 et s'étendant en direction opposée du fond 9.

Le bilame 3 est ainsi relié électriquement à la languette 5 par la vis 8 conductrice, tandis que la languette 5 est isolée de la languette 4 par contact avec le fond 65, les parties horizontales des languettes 4,5 étant disposées de part et d'autre du fond 65.

La vis 8 permet un assemblage du bilame 3, serrée entre la tête de la vis 8 et la pièce 70, de la pièce 60 et de la languette 5 avec le fond 9.

Les moyens d'espacement selon l'invention sont formés par ce nez 71 en appui sur le fond 65. Ainsi le serrage du disjoncteur 30, ici de faible épaisseur, est indépendant du serrage de la vis 8.

Il est formé ainsi un limiteur de pression, en sorte que le disjoncteur ne risque pas de fluer, notamment lorsqu'il est à base de polymère semi-conducteur ("PolySwitch") et/ou de casser, notamment lorsqu'il est à base de céramique. En effet, la force de serrage dépend des pattes 80.

On appréciera que les diverses pièces sont fixes en rotation par coopération de formes. La pièce 70 est immobilisée en rotation par coopération du nez 71 avec l'ouverture 91 complémentaire.

Ce nez 71 fixe en rotation la pièce 60 ainsi que le disjoncteur 30 et isole celui-ci de la vis 8.

La languette 4 peut traverser à jeu l'ouverture 63 en étant fixée en rotation par le nez 71.

On notera que le serrage du disjoncteur 30 peut être précis puisqu'il dépend de la distance entre les fonds 9,65 et donc de la longueur du nez 71.

En variante le nez 71 peut présenter deux méplats pour immobilisation en rotation de la pièce 70. Ce nez 171 (figure 6) peut être de forme annulaire comme les divers passages qu'il traverse, ainsi que le contour de la saillie 62.

En effet (figure 6) l'immobilisation en rotation des pièces 60,70 est effectuée par au moins un téton 72 issu latéralement de la pièce isolante 70 et traversant un passage 92 latéral du fond 9 pour s'engager dans une ouverture complémentaire 41 pratiquée dans la base de la languette 4.

Ainsi la pièce 70 fixe en rotation la languette 4 par coopération du téton 72 avec l'ouverture 41, tandis que la languette 4 fixe en rotation la pièce isolante 60 par coopération avec l'ouverture 63.

En variante, le téton 72 peut être inséré entre deux nervures 64 issues de la pièce 60 pour immobilisation en rotation des pièces isolantes.

Bien entendu (figure 8) l'organe d'assemblage conducteur des pièces 60,70 peut consister en un rivet 81, en variante un boulon, avec une tête maintenant le bilame 3 en contact avec la pièce 70 et un fût avec à son extrémité un trou borgne.

Par déformation de l'extrémité du rivet 81 metallique (sertissage), on vient fixer la languette 5 au contact du fond 65 de la pièce 60. Les pattes élastiquement 180 sont distinctes de la saillie 62.

Ces pattes 180 inclinées vers la périphérie externe de la rondelle 60 ont une extrémité effilée et peuvent être au nombre de trois par exemple en étant plus longues que les pattes de la figure 4. La saillie 62 peut être continue et plus solide.

La pression exercée sur le disjoncteur 30 est donc plus précise en étant moins influencée par les tolérances de fabrication. Ces pattes 180 sont facilement réalisables par moulage laissant apparaître un trou 181. Les pattes 180 sont plus hautes que la saillie 62.

A la figure 9, la rondelle Belleville 280 présente une périphérie externe plane 281 comme à la figure 8, pour un bon contact avec la périphérie externe la base de la languette 4 et une bonne assise du disjoncteur 30, comme à la figure 8.

La saillie 62 sert donc de centreur à la rondelle 280 en coopèrant avec la périphérie interne de la rondelle 280.

Avantageusement, on choisi la courbe caractéristique de la rondelle 280 pour que celle-ci présente une partie plate, afin de s'affranchir des tolérances de fabrication et exercer une charge constante prédéterminée sur le disjoncteur 30. La pièce creuse 60 protège la rondelle 280 en étant plus haute que celle-ci.

Bien entendu, on peut inverser les structures.

Ainsi à la figure 10 le téton 172 est issu en saillie axiale de la pièce 60 et traverse l'ouverture 92 du fond 9 pour s'engager dans une échancrure 73 complémentaire de la pièce 70.

Les tétons 72 (figure 6), 172 (figure 10) peuvent constituer les moyens d'espacement le nez 171 étant alors raccouci.

En effet on peut prévoir trois tétons 72,172, repartis à 180° les un par rapport aux autres, venant chacun en contact avec le fond 65 ou avec le fond d'un trou borgne de la pièce 70.

A la figure 11, les moyens d'espacement consistent en un prolongement de la saillie 162 traversant centralement pour ce faire la languette 4, le disjoncteur 30 et une ouverture 291 du fond 9. L'extrémité libre de la saillie 162 vient en appui sur la pièce 70 dont le nez 271 est raccourci et coopére avec la périphérie interne de la saillie 162.

Le blocage en rotation est effectué par la saillie 162 à contour de forme rectangulaire par exemple coopérant de manière complémentaire avec l'ouverture 291 et le nez 271 conformés en conséquence.

En variante le blocage en rotation est effectué comme dans les figures 8 ou 10, la saillie 162 étant annulaire et le nez 271 cylindrique. La saillie 162 peut également coopérer, par son extrémité libre, directement avec le fond 9 et ne pas traverser celui-ci.

En variante la saillie 162 peut être solidaire du corps 2 en étant rapportée centralement sur le fond 9.

L'élément de contact 3 peut avoir uniquement une fonction d'accrochage du fait de la présence du disjoncteur thermique 30, celui-ci disjonctant automatiquement pour une température donnée, en sorte que l'utilisateur peut retirer le bouchon 1 lorsque le corps de chauffage 10 a atteint la température désirée ; un dispositif d'avertissement étant alors prévu.

De même, on peut enfoncer dans le corps 2 une fiche d'un accessoire par exemple une fiche d'alimentation d'une lampe d'éclairage ou autre.

La prise de courant peut ne pas faire office de corps d'allumage d'allume-cigares en ayant une structure similaire. Dans ce cas, l'élément de contact 3 est simplifié et n'a plus une fonction de bilame et d'accrochage, tandis que le disjoncteur 30, assure une protection.

Les parties d'alimentation 4,5 peuvent avoir une autre forme, par exemple, leur partie axiale peut être conformée pour constituer une partie femelle.

La languette 4 peut être reliée à la borne positive de la batterie et la languette 5 à la borne négative de celle-ci.

Le nombre des organes d'assemblage 8,81 dépend des applications tout comme le serrage du disjoncteur, fonction de l'écartement entre les fonds 65,9.

Ce serrage permet une surchauffe sans endommagement, notamment claquage, du disjoncteur et on notera que les perçages ou passages centraux des nez 71,171,271 sont évasés, ici de forme tronconique, en sorte que les organes 8,81 n'ont pas d'action de déformation nuisible sur les saillies 62,162 et les moyens élastiques 80, 180, 280. Bien entendu l'évasage est dirigé vers le fond 65 de la pièce 60.

La première pièce isolante peut consister en une simple plaque rectangulaire pourvue de saillies 61,62,162..

La forme de la base de la languette 4 peut être quelconque.

Ainsi à la figure 12 la languette 4 présente une partie horizontale dotée centralement d'un seul tenant d'une cheminée 42 dirigée vers le fond 9 et traversée par le nez isolant 371 de la pièce 70.

Le nez 371 est épaulé et presente une portion de diamètre réduit entourée par la cheminée 42. Les moyens d'espacement sont constitués par le rebord 66 (ou jupe), périphérique d'orientation axiale, de la pièce 60 simplifiée. Un léger jeu existe alors entre le fond 65 et l'extrémité du nez 371. Les pattes élastiques 380 sont bombées et issues du fond 65 à la faveur de fentes. Ces pattes 380 éffilées prennent appui sur la partie centrale de la base de la languette 4 et sont dirigées vers l'axe de la prise. La pièce 60 est alors dépourvue de saillie.

Le disjoncteur réarmable consiste en un disque bilame 300 troué centralement pour passage de la portion de diamètre réduit du nez 371. Ce disque 300 est pincé à sa périphérie interne entre deux appuis, à savoir, l'épaulement du nez et l'extrémité libre, avantageusement arrondie, de la cheminée 42 formant la partie de pression.

Il foncitonne comme décrit dans le document FR-A-2 377 579 auquel on se reportera, et présente donc deux métaux de coéfficient de dilatation différent en étant obtenu de manière habituelle, par exemple par laminage. Normalement le disque 300 embouti est en contact avec le fond 9 (figure 12) et en cas de chauffage, lorsque la température du disque atteint une valeur excessive, celui-ci cloque (et donc se retourne) ce qui a pour effet de couper immédiatement l'alimentation électrique du corps de chauffage 10. La bilame se refroidit alors et se réarme, en reprenant sa position initiale que lorsque sa température a diminuée d'une valeur suffissante. On appréciera que le pincement du disque 300 entre ses appuis se fait de manière précise et sans risque de déterioration grâce aux pattes 380 permettant un serrage contrôlé indépendant de l'organe de serrage 8.

A la figure 13 la première pièce isolante 600 forme un connecteur et le disque bilame 300 est pincé entre l'extrémité libre d'un nez court 471 de la seconde pièce isolante 70 et l'extrémité libre d'une cheminée appartenant à une pièce électriquement conductrice 400 portée par la languette 40 reliée à la masse de la batterie. Le connecteur 600, entoure l'autre languette 50 (relié à la borne positive de la batterie) et est fendue pour introduction de la partie horizontale de la languette 40 de forme tortueuse. Le connecteur présente un fond 650, de part et d'autre duquel s'étendent les parties horizontales des languettes 40, 50. La partie horizontale de la languette 40 est en contact indirect par la pièce 400, à section en forme de L, avec le disjoncteur 300 et est échancrée localement pour passage d'une cheminée 362 issue centralement du fond 650 et pénétrant à l'intérieur du nez 471 creusé à cet effet. Comme aux figures 9 et 11 la rondelle Belleville 280 prend appui sur le fond 650 et sollicite la languette 40 et la pièce 400 en direction du fond 9.

C'est le rebord (ou jupe) du connecteur qui constitue les moyens d'espacement, le dit rebord présentant un épaulement 472 à cet effet. La cheminée 362 sert également de centreur à la rondelle 280.

Le corps 2 est fixé à la paroi du véhicule, de manière connue en soi, par l'intermédiaire d'une bague 500 conductrice de lumière en matière isolante. Le montage est réalisé par clipsage.

En variante, la partie horizontale de la languette 4 ou 40 peut être échancrée à sa périphérie externe et être centrée à la faveur de protubérances issues de la pièce 60, 600 par coopération de formes des échancrures avec les dites protubérances. Il en est de même du disjoncteur de figures 4 à 11 en sorte que la présence d'un nez de centrage issues de l'une des pièces 60, 70 n'est pas impérative.

## Revendications

1. Prise de courant, notamment pour véhicule automobile, du genre comportant un corps creux (2) conducteur avec un fond (9) pour réception d'une fiche de courant (1) et établissement d'un circuit électrique par l'intermédiaire de pièces portées par ledit corps d'allumage, à savoir, d'un disjoncteur thermique réarmable (30,300) en contact avec le fond (9) du corps (2), d'une première partie d'alimentation électrique (4,40) au contact direct ou indirect dudit disjoncteur (30,300) et portée par une première pièce isolante électriquement (60,600), d'une seconde partie d'alimentation électrique (5,50) isolée de la première partie d'alimentation électrique (4,40) par ladite première pièce isolante et reliée électriquement à un élément de contact électrique (3) propre à coopérer avec ladite fiche de courant (1) en étant portée par une seconde pièce isolante électriquement (70) pour isolation dudit élément de contact électrique par rapport au fond (9) du corps (2), dans lequel ladite seconde pièce isolante (70) et ledit élément de contact (3) sont montés à l'intérieur du corps (2), tandis que ledit disjoncteur (30,300), les première (4,40) et seconde (5,50) parties d'alimentation électriques ainsi que ladite première pièce isolante (60,600) sont montés à l'extérieur du corps (2), et dans lequel des moyens d'assemblage (8,81) interviennent entre lesdites pièces isolantes (60,600;70) pour leur assemblage au corps (2), caractérisée en ce que le disjoncteur thermique réarmable (30,300) est soumis à l'action de moyens élastiques spécifiques à action axiale (80,180,280,380) prenant appui sur ladite première pièce isolante (60,600) pour action sur la première partie d'alimentation électrique (4,40) et serrage contrôlé dudit disjoncteur (30) entre le fond (9) du corps (2) et une partie de pression conductrice portée par ladite première partie d'alimentation électrique (4,40), et en ce que des moyens d'espacement (71,171,271,66,472) distincts de la première partie d'alimentation électrique (4,40) et dudit disjoncteur (30,300), sont prévus pour maintenir la première pièce isolante (60,600) à distance du fond (9) du corps (2), en sorte de créer un limiteur de pression.

2. Prise de courant selon la revendication 1, caractérisée en ce que les moyens élastiques à action axiale (80,180,380) consistent en des pattes saillantes élastiquement déformables issues de la première pièce isolante (60) pour action sur la première partie d'alimentation électrique (4) formant un organe presseur pour ledit disjoncteur.

3. Prise de courant selon la revendication 2, caractérisée en ce que lesdites pattes (80,180,380) élastiquement déformables sont effilées.

4. Prise de courant selon la revendication 2 ou 3, caractérisée en ce que lesdites pattes (80) interrompent localement le contour d'une saillie (62) issue de la première pièce isolante (60), ladite saillie (62) étant propre à coopérer avec un nez saillant (71) issu de la seconde pièce isolante (70) en étant moins haute que lesdites pattes (80).

5. Prise de courant selon la revendication 2 ou 3 caractérisé en ce que les pattes (380) ont une forme bombée et sont issues du fond (65) de la première pièce isolante (60).

6. Prise de courant selon la revendication 1, caractérisée en ce que les moyens élastiques à action axiale consistent en une rondelle Belleville (280) centrée intérieurement par la première pièce isolante (60,600) et agissant sur la première partie d'alimentation électrique (4,40).

7. Prise de courant selon l'une quelconque des revendications 1 à 6, caractérisée en ce que les moyens d'espacement (71,171,271) traversent ladite première partie d'alimentation électrique (4) et ledit disjoncteur (30).

8. Prise de courant selon l'une quelconque des revendications 1 - 7, caractérisée en ce que les moyens d'espacement sont issus de l'une des première (60,600) et seconde (70) pièces isolantes, pour venir en appui sur l'un des constituants fond (9) du corps (2) - autre pièce isolante (70,60,600).

9. Prise de courant selon la revendication 8, caractérisée en ce que les moyens d'espacement (71) consistent en un nez (71) issu de la seconde pièce isolante (70), et en ce que l'extrémité libre dudit nez (71) est propre à coopérer en butée avec la première pièce isolante (60).

10. Prise de courant selon l'une quelconque des revendications 1 à 8, caractérisée en ce que les moyens d'espacement consistent en une saillie (162) issue de la première pièce isolante (60), et en ce que l'extrémité libre de ladite saillie vient en appui sur la seconde pièce isolante (70).

11. Prise de courant selon la revendication 8, caractérisée en ce que les moyens d'espacement (66,472) sont formés à la faveur d'un rebord périphérique que présente la première pièce isolante (60,600).

12. Prise de courant selon l'une quelconque des revendications 1 à 11, caractérisée en ce que ladite première partie d'alimentation (4) est montée mobile axialement par rapport à la première pièce isolante (60) en étant liée en rotation à celle-ci par coopération de formes.

13. Prise de courant selon l'une quelconque des revendications 1 à 12, caractérisée en ce que la première pièce isolante (60,600) est de forme creuse pour protection desdits moyens élastiques à action axiale et dudit disjoncteur.

14. Prise de courant selon l'une quelconque des revendications 1 à 13, caractérisée en ce que ledit disjoncteur thermique (30) consiste en un disjoncteur à coefficient de température positif en contact direct avec la première partie d'alimentation électrique (4).

15. Prise de courant selon l'une quelconque des revendications 1 à 13, caractérisée en ce que le disjoncteur thermique consiste en un disque bilame (300) tramé et pincé à sa périphérie interne entre un appui porté par la seconde pièce isolante (70) et un appui (42,400) porté par la première pièce d'alimentation électrique (4,40).

16. Prise de courant selon l'une quelconque des revendications précédentes, caractérisée en ce qu'elle constitue un corps d'allumage d'un allume-cigares, son élément de contact (3) constituant un élément d'accrochage pour un bouchon chauffant (1).

## Claims

1. A power point, especially for a motor vehicle, of the kind comprising a conductive hollow body (2), with a base (9) for receiving an electric plug (1) and for establishing an electric circuit through interposed members carried by the said lighter body, namely a rearmable thermal cut-out (30, 300) in contact with the base (9) of the body (2), a first electrical supply member (4, 40) in direct or indirect contact with the said cut-out (30, 300) and carried by a first electrically insulating member (60, 600), a second electrical supply member (5, 50) insulated from the first electrical supply member (4, 40) by the said first insulating member and connected electrically to an electrical contact element (3) adapted to cooperate with the said electric plug (1), the second electrical supply member being carried by a second electrically insulating member (70) for insulation of the said electrical contact element with respect to the base (9) of the body (2), in which the said second insulating member (70) and the said contact element (3) are mounted within the body (2), while the said cut-out (30, 300) and the first (4, 40) and second (5, 50) electrical supply members, together with the said first insulating member (60, 600), are mounted outside the body (2), and in which assembly means (8, 81) are interposed between the said insulating members (60, 600; 70) for their assembly to the body (2), characterised in that the rearmable thermal cut-out (30, 300) is subjected to the action of specific, axially acting, resilient means (80, 180, 280, 380), which bear on the said first insulating member (60, 600) so as to act on the first electrical supply member (4, 40), and so that the said cut-out (30) is gripped in a controlled manner between the base (9) of the body (2) and a conductive pressure element carried by the said first electrical supply member (4, 40), and in that spacing means (71, 171, 271, 66, 472), which are distinct from the first electrical supply member (4, 40) and from the said cut-out (30, 300), are arranged to maintain the first insulating member (60, 600) spaced away from the base (9) of the body (2), so as to constitute a pressure limiter.

2. A power point according to Claim 1, characterised in that the axially acting resilient means (80, 180, 380) consist of elastically deformable lugs projecting from the first insulating member (60) so as to act on the first electrical supply member (4), which constitutes a pressing member for the said cut-out.

3. A power point according to Claim 2, characterised in that the said elastically deformable lugs (80, 180, 380) are tapered.

4. A power point according to Claim 2 or Claim 3, characterised in that the said lugs (80) interrupt locally the perimeter of a projecting element (62) projecting from the first insulating member (60), the said projecting element (62) being adapted to cooperate with a projecting nose (71) which projects from the second insulating member (70), and which is less high than the said lugs (80).

5. A power point according to Claim 2 or Claim 3, characterised in that the lugs (380) have a bowed form and project from the base (65) of the first insulating member (60).

6. A power point according to Claim 1, characterised in that the axially acting resilient means consist of a Belleville ring (280), which is centred internally by the first insulating member (60, 600) and which acts on the first electrical supply member (4, 40).

7. A power point according to any one of Claims 1 to 6, characterised in that the spacing means (71, 171, 271) extend through the said first electrical supply member (4) and the said cut-out (30).

8. A power point according to any one of Claims 1 to 7, characterised in that the spacing means project from one of the first (60, 600) and second (70) insulating members, so as to come into engagement on one of the components comprising the base (9) of the body (2) and the other insulating member (70, 60, 600).

9. A power point according to Claim 8, characterised in that the spacing means (71) consist of a nose (71) projecting from the second insulating member (70), and in that the free end of the said nose (71) is adapted to cooperate in abutting relationship with the first insulating member (60).

10. A power point according to any one of Claims 1 to 8, characterised in that the spacing means consist of a projecting element (162) projecting from the first insulating member (60), and in that the free end of the said projecting element comes into engagement on the second insulating member (70).

11. A power point according to Claim 8, characterised in that the spacing means (66, 472) are defined in a peripheral flange of the first insulating member (60, 600).

12. A power point according to any one of Claims 1 to 11, characterised in that the said first electrical supply member (4) is mounted for axial movement with respect to the first insulating member (60), being coupled to the latter, for rotation therewith, in mating cooperation.

13. A power point according to any one of Claims 1 to 12, characterised in that the first insulating member (60, 600) is of hollow form for the protection of the said axially acting resilient means and the said cut-out.

14. A power point according to any one of Claims 1 to 13, characterised in that the said thermal cut-out (30) consists of a positive temperature coefficient cut-out which is in direct contact with the first electrical supply member (4).

15. A power point according to any one of Claims 1 to 13, characterised in that the thermal cut-out consists of a bimetal disc (300), which is inserted and clamped at its inner periphery between an abutment carried by the second insulating member (70) and an abutment element (42, 400) carried by the first electrical supply member (4, 40).

16. A power point according to any one of the preceding Claims, characterised in that it constitutes a lighter body of a cigar lighter, with its contact element (3) constituting an element for hooking engagement with a heater plug (1).

## Patentansprüche

1. Steckdose, insbesondere für Kraftfahrzeuge, in der Ausführung mit einem leitenden Hohlkörper (2) mit einem Boden (9) für die Aufnahme eines elektrischen Steckers (1) und die Herstellung eines Stromkreises über Teile, die an dem besagten Anzündkörper (2) angebracht sind, und zwar über einen rückstellbaren thermischen Schutzschalter (30, 300), der mit dem Boden (9) des Körpers (2) in Kontakt steht, einen ersten Stromzuleitungsteil (4, 40), der in direktem oder indirektem Kontakt mit dem besagten Schutzschalter (30, 300) steht und an einem ersten elektrisch nichtleitenden Teilstück (60, 600) angebracht ist, einen zweiten Stromzuleitungsteil (5, 50), der von dem ersten Stromzuleitungsteil (4, 40) durch das besagte erste nichtleitende Teilstück isoliert und elektrisch mit einem elektrischen Kontaktelement (3) verbunden ist, das mit dem besagten Stecker (1) zusammenwirken kann, wobei er an einem zweiten elektrisch nichtleitenden Teilstück (70) angebracht ist, um die Isolierung des besagten Kontaktelements im Verhältnis zum Boden (9) des Körpers (2) herbeizuführen, wobei das besagte zweite nichtleitende Teilstück (70) und das besagte Kontaktelement (3) im Innern des Körpers (2) angebracht sind, während der besagte Schutzschalter (30, 300), der erste (4, 40) und der zweite (5, 50) Stromzuleitungsteil sowie das besagte erste nichtleitende Teilstück (60, 600) außerhalb des Körpers (2) angebracht sind, und wobei Verbindungsmittel (8, 81) zwischen den besagten nichtleitenden Teilstücken (60, 600; 70) für ihre Anbringung am Körper (2) eingefügt sind, **dadurch gekennzeichnet**, daß der rückstellbare thermische Schutzschalter (30) der Einwirkung von speziellen axial wirksamen elastischen Mitteln (80, 180, 280, 380) ausgesetzt ist, die an dem besagten ersten nichtleitenden Teilstück (60, 600) anliegen, um auf den ersten Stromzuleitungsteil (4, 40) einzuwirken und eine kontrollierte Einspannung des besagten thermischen Schutzschalters (30) zwischen dem Boden (9) des Körpers (2) und einem leitenden Druckteil herbeizuführen, der an dem besagten ersten Stromzuleitungsteil (4, 40) angeordnet ist, und daß vom ersten Stromzuleitungsteil (4, 40) und von dem besagten Schutzschalter (30, 300) getrennte Abstandsmittel (71, 171, 271, 66, 472) vorgesehen sind, um das erste nichtleitende Teilstück (60, 600) in einem Abstand vom Boden (9) des Körpers (2) zu halten, so daß ein Druckbegrenzer geschaffen wird.

2. Steckdose nach Anspruch 1 , **dadurch gekennzeichnet,** daß die axial wirksamen elastischen Mittel (80, 180, 380) aus elastisch verformbaren vorspringenden Ansätzen bestehen, die aus dem ersten nichtleitenden Teilstück (60) herausgearbeitet sind, um auf den ersten Stromzuleitungsteil (4) einzuwirken, wobei ein Druckorgan für den besagten Schutzschalter gebildet wird.

3. Steckdose nach Anspruch 2 **, dadurch gekennzeichnet,** daß die besagten elastisch verformbaren Ansätze (80, 180, 380) konisch zulaufend ausgeführt sind.

4. Steckdose nach Anspruch 2 oder 3 , **dadurch gekennzeichnet,** daß die besagten Ansätze (80) örtlich den Umriß eines Vorsprungs (62) unterbrechen, der aus dem ersten nichtleitenden Teilstück (60) herausgearbeitet ist, wobei der besagte Vorsprung (62) mit einer vorspringenden Nase (71) zusammenwirken kann, die aus dem zweiten nichtleitenden Teilstück (70) herausgearbeitet und mit einer geringeren Höhe als die besagten Ansätze (80) ausgeführt ist.

5. Steckdose nach Anspruch 2 oder 3 , **dadurch gekennzeichnet,** daß die Ansätze (380) eine gewölbte Form aufweisen und aus dem Boden (65) des ersten nichtleitenden Teilstücks (60) herausgearbeitet sind.

6. Steckdose nach Anspruch 5 , **dadurch gekennzeichnet,** daß die axial wirksamen elastischen Mittel aus einer Tellerfeder (280) bestehen, die innen durch das erste nichtleitende Teilstück (60, 600) zentriert werden und auf den ersten Stromzuleitungsteil (4, 40) einwirken.

7. Steckdose nach einem der Ansprüche 1 bis 6 , **dadurch gekennzeichnet,** daß die Abstandsmittel (71, 171, 271) durch den besagten ersten Stromzuleitungsteil (4) und den besagten Schutzschalter (30) hindurchgehen.

8. Steckdose nach einem der Ansprüche 1 bis 7 , **dadurch gekennzeichnet,** daß die Abstandsmittel aus dem ersten (60, 600) oder dem zweiten (70) nichtleitenden Teilstück herausgearbeitet sind, um an einem der Bestandteile Boden (9) des Körpers (2) oder anderes nichtleitendes Teilstück (70, 60, 600) zur Auflage zu kommen.

9. Steckdose nach Anspruch 8 , **dadurch gekennzeichnet,** daß die Abstandsmittel (71) aus einer Nase (71) bestehen, die aus dem zweiten nichtleitenden Teilstück (70) herausgearbeitet ist, und daß das freie Ende der besagten Nase (71) als Anschlag mit dem ersten nichtleitenden Teilstück (60) zusammenwirken kann.

10. Steckdose nach einem der Ansprüche 1 bis 8 , **dadurch gekennzeichnet,** daß die Abstandsmittel aus einem Vorsprung (162) bestehen, der aus dem ersten nichtleitenden Teilstück (60) herausgearbeitet ist, und daß das freie Ende des besagten Vorsprungs am zweiten nichtleitenden Teilstück (70) zur Auflage kommt.

11. Steckdose nach Anspruch 8 , **dadurch gekennzeichnet,** daß die Abstandsmittel (66, 472) mittels einer Umfangsrandleiste gebildet werden, die am ersten nichtleitenden Teilstück (60, 600) vorgesehen ist.

12. Steckdose nach einem der Ansprüche 1 bis 11, **dadurch gekennzeichnet,** daß der besagte erste Stromzuleitungsteil (4) axial beweglich im Verhältnis zum ersten nichtleitenden Teilstück (60) gelagert ist, wobei er mit diesem durch formschlüssiges Zusammenwirken drehfest verbunden ist.

13. Steckdose nach einem der Ansprüche 1 bis 12 **, dadurch gekennzeichnet,** daß das erste nichtleitende Teilstück (60, 600) hohlförmig ausgeführt ist, um den Schutz der besagten axial wirksamen elastischen Mittel und des besagten Schutzschalters zu ermöglichen.

14. Steckdose nach einem der Ansprüche 1 bis 13 , **dadurch gekennzeichnet,** daß der besagte thermische Schutzschalter (30) aus einem Schutzschalter mit positivem Temperaturkoeffizienten besteht, der sich in direktem Kontakt mit dem ersten Stromzuleitungsteil (4) befindet.

15. Steckdose nach einem der Ansprüche 1 bis 13 , **dadurch gekennzeichnet,** daß der thermische Schutzschalter aus einem eingeschlagenen Bimetallstreifen (300) besteht, der an seinem inneren Umfang zwischen einer Auflage an dem zweiten nichtleitenden Teilstück (70) und einer Auflage (42, 400) an dem ersten Stromzuleitungsteil (4, 40) eingeklemmt ist.

16. Steckdose nach einem der vorangehenden Ansprüche, **dadurch gekennzeichnet,** daß sie einen Anzündkörper eines Zigarrenanzünders bildet, wobei ihr Kontaktelement (3) ein Haltelement für einen Heizeinsatz (1) bildet.
